(19) Europäisches Patentamt / European Patent Office / Office européen des brevets

(11) **EP 2 942 999 A1**

(12) **EUROPEAN PATENT APPLICATION**
published in accordance with Art. 153(4) EPC

(43) Date of publication:
**11.11.2015 Bulletin 2015/46**

(51) Int Cl.:
***H04W 24/00*** (2009.01)

(21) Application number: **13870049.7**

(22) Date of filing: **04.01.2013**

(86) International application number:
**PCT/CN2013/070004**

(87) International publication number:
**WO 2014/106317 (10.07.2014 Gazette 2014/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Fujitsu Limited**
**Kawasaki-shi, Kanagawa 211-8588 (JP)**

(72) Inventors:
• **WANG, Yi**
**Beijing 100025 (CN)**

• **XU, Yueqiao**
**Beijing 100025 (CN)**
• **ZHANG, Lei**
**Beijing 100025 (CN)**

(74) Representative: **Wilding, Frances Ward**
**Haseltine Lake LLP**
**Lincoln House, 5th Floor**
**300 High Holborn**
**London WC1V 7JH (GB)**

(54) **METHOD FOR CHANNEL MEASUREMENT, CONFIGURATION METHOD AND APPARATUS FOR CHANNEL MEASUREMENT**

(57)     Embodiments of the present disclosure provide a method for channel measurement, a method for configuring channel measurement and an apparatus therefor. The method includes: receiving, by UE, RRC signaling transmitted by an eNB, the RRC signaling including channel measurement indication and a measurement carrier frequency and a measurement bandwidth configured by the eNB for the UE; determining a channel measurement type by the UE according to the channel measurement indication, the channel measurement type including: performing channel measurement based on a reference signal to which the measurement carrier frequency corresponds, or performing channel measurement based on an actual reference signal; determining a reference signal sequence for performing channel measurement by the UE according to the channel measurement type; and performing channel measurement by the UE on the measurement carrier frequency with the configured measurement bandwidth by using the reference signal sequence. With the method and apparatus of the embodiments of the present disclosure, the user equipment can correctly reconstruct reference signals in consistence with actually transmitted reference signals, thereby performing correct measurement.

| 301 |
|---|
| receiving, by UE, RRC signaling transmitted by an eNB, the RRC signaling including channel measurement indication and a measurement carrier frequency and a measurement bandwidth configured by the eNB for the UE |

| 302 |
|---|
| determining a channel measurement type by the UE according to the channel measurement indication |

| 303 |
|---|
| determining a reference signal sequence for performing channel measurement by the UE according to the determined channel measurement type |

| 304 |
|---|
| performing channel measurement by the UE on a configured measurement carrier frequency with the configured measurement bandwidth by using the determined reference signal sequence |

Fig. 3

EP 2 942 999 A1

**Description**

Technical Field

The present disclosure relates to the field of communications, and in particular to a method for channel measurement, a method for configuring channel measurement and an apparatus therefor.

Background

In a long-term evolution (LTE) system, measurement may be divided into radio link monitoring measurement, radio resource management measurement and channel state information measurement. User equipment (UE) may perform measurement according to cell-specific reference signals (CRSs), for example, the UE may measure cell downlink quality according to the CRSs, obtain reference signal receiving quality (RSRQ) and reference signal receiving power (RSRP) etc. according to the CRSs, and estimate a channel quality indicator (CQI) according to the CRSs etc. The UE may also perform measurement according to a channel state information reference signal (CSI-RS), or may perform channel measurement or channel estimation according to a UE-specific reference signal, such as a demodulation reference signal (DM-RS).

In order that the UE may correctly demodulate a CRS, a CSI-RS and a DM-RS (such as antenna ports 7-14) when cell system bandwidth information is indefinite, a sequence generation manner and a mapping manner of these three reference signals are based on that all sequence values of the reference signals are expanded towards the two ends taking a cell carrier frequency as a center, regardless of a size of the cell system bandwidth. For example, a sequence of a CRS is:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,...,2N_{\text{RB}}^{\max,\text{DL}} - 1 \tag{1};$$

and a time-frequency resource mapped to a CRS symbol is:

$$
\begin{aligned}
&k = 6m + \left(v + v_{\text{shift}}\right) \bmod 6 \\
&l = \begin{cases} 0, N_{\text{symb}}^{\text{DL}} - 3 & \text{if } p \in \{0,1\} \\ 1 & \text{if } p \in \{2,3\} \end{cases} \\
&m = 0,1,...,2 \cdot N_{\text{RB}}^{\text{DL}} - 1 \\
&m' = m + N_{\text{RB}}^{\max,\text{DL}} - N_{\text{RB}}^{\text{DL}}
\end{aligned}
\tag{2}.
$$

Taking that a system bandwidth is 1.4 MHz as an example, CRS symbols in 6 physical resource blocks (PRBs) taking a cell carrier frequency as a center are as follows in turn:

$$\left[ a_{0,l}^{(p)} \; a_{6,l}^{(p)} \; a_{12,l}^{(p)} \; a_{18,l}^{(p)} ...... a_{30,l}^{(p)} \; a_{36,l}^{(p)} \right] = \left[ r_{l,n_s}(104) \; r_{l,n_s}(105) \; r_{l,n_s}(106) \; r_{l,n_s}(107) ..... r_{l,n_s}(114) \; r_{l,n_s}(115) \right];$$

and taking that a system bandwidth is 5 MHz as an example, CRS symbols in 25 PRBs taking a cell carrier frequency as a center are as follows in turn:

$$\left[ a_{0,l}^{(p)} \; a_{6,l}^{(p)} \; a_{12,l}^{(p)} \; a_{18,l}^{(p)} ...... a_{30,l}^{(p)} \; a_{36,l}^{(p)} \right] = \left[ r_{l,n_s}(85) \; r_{l,n_s}(86) \; r_{l,n_s}(87) \; r_{l,n_s}(88) ..... r_{l,n_s}(133) \; r_{l,n_s}(134) \right];$$

wherein, the CRSs in the 6 PRBs taking a cell carrier frequency as a center are identical to the CRS symbols when the system bandwidth is 1.4 MHz.

It can be easily seen that although the bandwidths are different in the above assumptions, when the carrier frequency of the cells are identical and CRS symbols in N PRBs at the center are identical, the UE can still uniquely determine CRS symbols in multiple PRBs at the center when no bandwidth information is acquired. However, if the carrier frequencies of the cells transmitting reference signals are different, the CRS sequences are different; wherein, machine-type communication (MTC) with a limited bandwidth is a scenario.

In Release 11, 3GPP (the 3rd generation partnership project) RAN (radio access network) started a study item (SI) of RAN enhancement of MTC, and concluded the work in TR (Technical Report) 37.868. In TR 37.868, traffic characteristics and models under different M2M (machine-to-machine) application scenarios are mainly studied, as shown in Table 1.

Table 1

| Characteristics | Traffic model 1 | Traffic model 2 |
| --- | --- | --- |
| Number of MTC devices | 1000, 3000, 5000, 10000, 30000 | 1000, 3000, 5000, 10000, 30000 |
| Arrival distribution | Uniform distribution over T | Beta distribution over T |
| Distribution period (T) | 60 seconds | 10 seconds |

And 3GPP RAN1 gives various technologies that can be used by low-cost MTC UE in TR 36.888, including reduction of maximum bandwidth, single receive RF chain, reduction of peak rate, reduction of transmit power, half duplex operation, and reduction of supported transmission modes, etc.

In this embodiment, for a downlink chain, the reduction of maximum bandwidth may be divided into: reduction of both an RF bandwidth and a baseband bandwidth; reduction of only a baseband bandwidth, but a baseband bandwidth of a data channel and a baseband bandwidth of a control channel are both reduced; and a baseband bandwidth of a data channel is only reduced, while a baseband bandwidth of a control channel is identical to a carrier system bandwidth.

In this embodiment, for an uplink chain, the reduction of maximum bandwidth may be divided into: reduction of both an RF bandwidth and a baseband bandwidth; and bandwidths are unchanged.

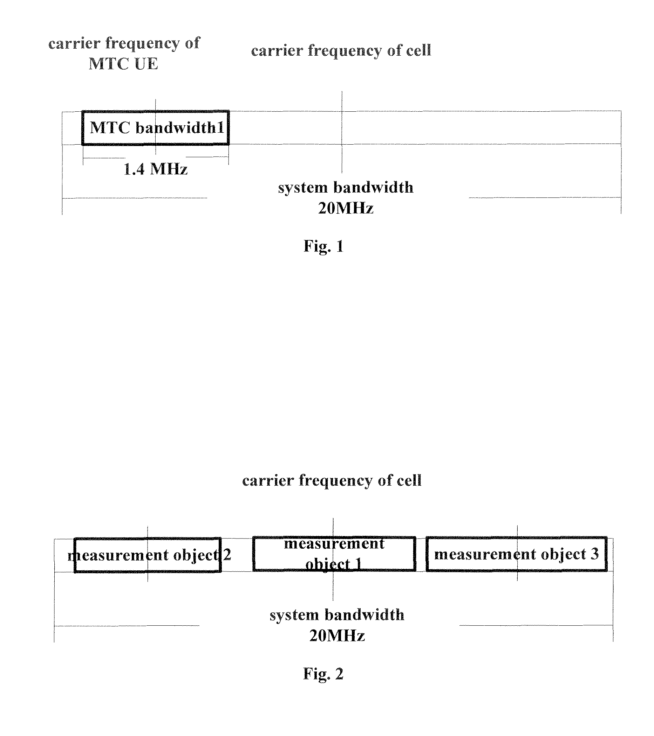

For MTC UE of which both an RF bandwidth and a baseband bandwidth are reduced or a baseband bandwidth is reduced but a baseband bandwidth of a data channel and a baseband bandwidth of a control channel are both reduced, signals transmitted on the whole carrier system bandwidth cannot be completely acquired, and only part of the signals on a bandwidth supported by the MTC UE may be acquired, which may be still unable to be correctly solved. For example, if the system bandwidth is 20 MHZ, and the maximum number of available resource blocks (RBs) is 110, while the bandwidth supported by the MTC UE is 1.4 MHZ, and the maximum number of available resource blocks (RBs) is 6, this UE may only receive signals of 6 RBs. These 6 RBs may be located at the center of the carrier system bandwidth, and may also be located anywhere in the carrier system bandwidth, as shown in Figure 1. As cell detection of UE is achieved by detecting a primary synchronization signal (PSS) and/or a secondary synchronization signal (SSS), and a physical broadcast channel (PBCH) at a center of a detected carrier, the MTC UE must access into the carrier first successfully, hence, an operational frequency of the MTC UE is aligned with a central frequency of the carrier.

After accessing into the cell successfully, an eNB may configure the UE to perform measurement, and the UE reports a measurement result to the eNB. And the eNB performs scheduling, etc., for the UE based on the measurement result of the UE. For MTC UE with a limited bandwidth, if the eNB configures it to measure frequency domain resources at a non-central position within the present cell bandwidth, such as measurement object 2 and measurement object 3 shown in Fig. 2, the UE needs to perform inter-frequency measurement. In an existing system, an eNB may configure UE with inter-frequency measurement, such as information on carrier frequency, and bandwidths, etc. And the UE may reconstruct reference signals by assuming that a configured carrier frequency is a central frequency of a bandwidth of an inter-frequency measurement object, and perform measurement based on the reference signals.

However, in the implementation of the present disclosure, the inventors found that for such type measurement, as the transmission of the reference signals does not take the configured carrier frequency as the central carrier frequency, and the UE reconstructs the reference signals on an assumption that the configured carrier frequency is the central carrier frequency, the reference signals are inconsistent with reference signals actually transmitted by an eNB, resulting in that the UE cannot perform correct measurement based on the reconstructed reference signals.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

Summary

An object of the embodiments of the present disclosure is to provide a method for channel measurement, a method for configuring channel measurement and an apparatus therefor, so as to support UE to reconstruct reference signals consistent with actually transmitted reference signals.

According to a first aspect of the embodiments of the present disclosure, there is provided a method for channel measurement, including:

receiving, by UE, RRC signaling transmitted by an eNB, the RRC signaling including channel measurement indication and a measurement carrier frequency and a measurement bandwidth configured by the eNB for the UE;

determining a channel measurement type by the UE according to the channel measurement indication, the channel measurement type including: performing channel measurement based on a reference signal to which the measurement carrier frequency corresponds, or performing channel measurement based on an actual reference signal;

determining a reference signal sequence for performing channel measurement by the UE according to the determined channel measurement type; and

performing channel measurement by the UE on a configured measurement carrier frequency with the configured measurement bandwidth by using the determined reference signal sequence.

According to a second aspect of the embodiments of the present disclosure, there is provided a method for configuring channel measurement, including:

transmitting RRC signaling by an eNB to UE, the RRC signaling including channel measurement indication and a measurement carrier frequency and a measurement bandwidth configured by the eNB for the UE, so that the UE determines a channel measurement type according to the channel measurement indication, the channel measurement type including: performing channel measurement based on a reference signal to which the measurement carrier frequency corresponds, or performing channel measurement based on an actual reference signal.

According to a third aspect of the embodiments of the present disclosure, there is provided user equipment (UE), including:

a receiving unit configured to receive RRC signaling transmitted by an eNB, the RRC signaling including channel measurement indication and a measurement carrier frequency and a measurement bandwidth configured by the eNB for the UE;

a first determining unit configured to determine a channel measurement type according to the channel measurement indication, the channel measurement type including: performing channel measurement based on the reference signal to which the measurement carrier frequency corresponds, or performing channel measurement based on an actual reference signal;

a second determining unit configured to determine a reference signal sequence for performing channel measurement according to the determined channel measurement type; and

a measuring unit configured to perform channel measurement on a configured measurement carrier frequency with the configured measurement bandwidth by using the determined reference signal sequence.

According to a fourth aspect of the embodiments of the present disclosure, there is provided an eNB, wherein the eNB includes:

a transmitting unit configured to transmit RRC signaling to UE, the RRC signaling including channel measurement indication and measurement carrier frequency and measurement bandwidth configured by the eNB for the UE, so that the UE determines a channel measurement type according to the channel measurement indication, the channel measurement type including: performing channel measurement based on the reference signal to which the measurement carrier frequency corresponds, or performing channel measurement based on an actual reference signal.

According to a fifth aspect of the embodiments of the present disclosure, there is provided a communication system, including the UE as described in the third aspect and the eNB as described in the fourth aspect.

According to a sixth aspect of the embodiments of the present disclosure, there is provided a computer-readable program, wherein when the program is executed in terminal equipment, the program enables a computer to carry out the method for channel measurement as described in the first aspect in the terminal equipment.

According to a seventh aspect of the embodiments of the present disclosure, there is provided a storage medium in which a computer-readable program is stored, wherein the computer-readable program enables a computer to carry out the method for channel measurement as described in the first aspect in terminal equipment

According to an eighth aspect of the embodiments of the present disclosure, there is provided a computer-readable program, wherein when the program is executed in an eNB, the program enables a computer to carry out the method for configuring channel measurement as described in the second aspect in the eNB.

According to a ninth aspect of the embodiments of the present disclosure, there is provided a storage medium in which a computer-readable program is stored, wherein the computer-readable program enables a computer to carry out the method for configuring channel measurement as described in the second aspect in an eNB.

An advantage of the embodiments of the present disclosure exists in that with the method and apparatus of the embodiments of the present disclosure, the user equipment can correctly reconstruct reference signals in consistence with actually transmitted reference signals, thereby being capable of performing correct channel measurement.

With reference to the following description and drawings, the particular embodiments of the present disclosure are disclosed in detail, and the principle of the present disclosure and the manners of use are indicated. It should be understood that the scope of the embodiments of the present disclosure is not limited thereto. The embodiments of the present disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced in size. Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments. In the drawings:

Figure 1 is a schematic diagram of a position of a carrier frequency resource of MTC UE in a system bandwidth;
Figure 2 is a schematic diagram of configuring UE by an eNB to perform inter-frequency measurement;
Figure 3 is a flowchart of a method for channel measurement of Embodiment 1;
Figure 4 is a schematic diagram of a carrier frequency $f_c$ on which the eNB is based in transmitting actual reference signals;
Figure 5 is a schematic diagram of comparison of a measurement carrier frequency configured by the eNB for the UE and the carrier frequency on which the eNB is based in transmitting actual reference signals;
Figure 6 is a schematic diagram of an offset between the measurement carrier frequency configured by the eNB for the UE and the carrier frequency on which the eNB is based in transmitting actual reference signals;
Figure 7 is a flowchart of a method for configuring channel measurement of Embodiment 2;
Figure 8 is a schematic diagram of a structure of UE of channel measurement of Embodiment 3; and
Figure 9 is a schematic diagram of a structure of an eNB of Embodiment 4.

Detailed Description

The foregoing and other features of the embodiments of the present disclosure shall become apparent with reference to the drawings and the following description. These embodiments are illustrative only, and are not intended to limit the present disclosure. For the principle and embodiments of the present disclosure to be easily understood by those skilled in the art, the embodiments of the present disclosure shall be described taking channel measurement of MTC UE and configuring channel measurement as examples. However, it should be understood that the embodiments of the present disclosure are not limited to the MTC UE, and are applicable to other UE with limited bandwidths.

Embodiment 1

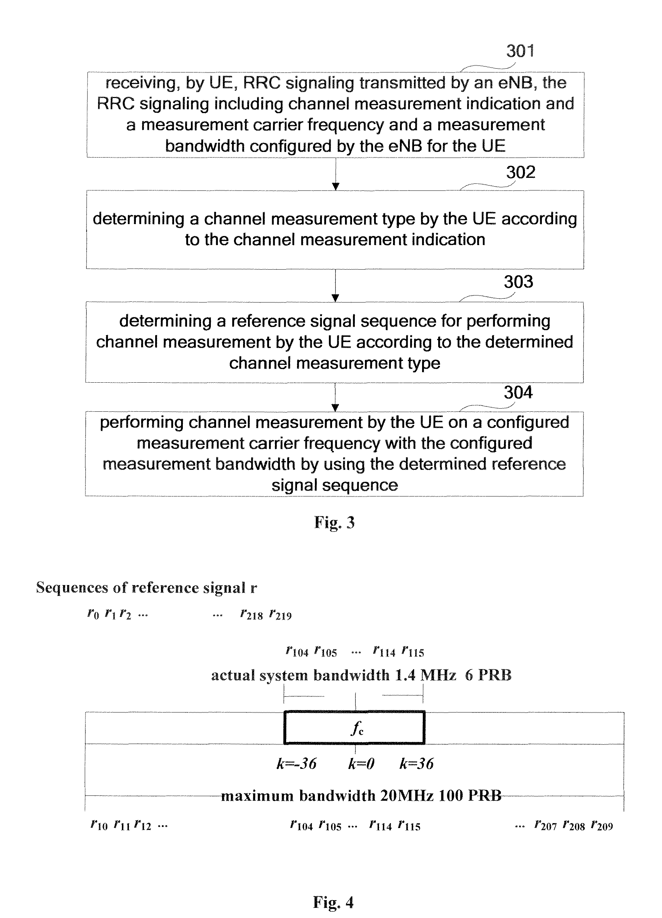

Embodiment 1 of the present disclosure provides a method for channel measurement. Fig. 3 is a flowchart of the method. Referring to Fig. 3, the method includes:

step 301: receiving, by UE, RRC signaling transmitted by an eNB, the RRC signaling including channel measurement indication and a measurement carrier frequency and a measurement bandwidth configured by the eNB for the UE; wherein, the channel measurement indication is used to indicate a channel measurement type; in an existing channel measurement process, as RRC signaling does not include the channel measurement indication, the UE will perform conventional channel measurement according to the measurement carrier frequency and bandwidth configured by the eNB; however, as described in the Background, for UE with a limited bandwidth, the eNB possibly configures it to measure frequency domain resources at a non-central position within the present cell bandwidth, and such measurement would possibly result in that the UE cannot perform correct measurement; while according to the method of this embodiment, channel measurement indication is newly added into the RRC signaling, so as to indicate the UE via the channel measurement indication whether to perform the above-described conventional channel measurement (i.e. performing channel measurement based on a reference signal to which the measurement carrier frequency corresponds) or to perform the newly-defined channel measurement (i.e. performing channel measurement based on an actual reference signal);

wherein, the channel measurement indication may indicate a channel measurement type via a value of 1 bit; for example, the conventional channel measurement is indicated by "0", and the newly-defined channel measurement is indicated by "1";

wherein, the channel measurement indication may be positioned before measurement object information of the RRC signaling, and may also be positioned within the measurement object information of the RRC signaling, which shall be described in the following embodiments;

step 302: determining a channel measurement type by the UE according to the channel measurement indication;

wherein, as described in the above example, if the channel measurement indication is "0", the UE determines to perform the conventional channel measurement, that is, performing channel measurement based on a reference signal to which the measurement carrier frequency corresponds; and if the channel measurement indication is "1", the UE determines to perform the newly-defined channel measurement, that is, performing channel measurement based on an actual reference signal;

step 303: determining a reference signal sequence for performing channel measurement by the UE according to the determined channel measurement type; and

step 304: performing channel measurement by the UE on a configured measurement carrier frequency with the configured measurement bandwidth by using the determined reference signal sequence;

wherein, if it is determined in step 302 that the channel measurement type is performing channel measurement based on the reference signal to which the measurement carrier frequency corresponds, that is, performing conventional channel measurement, the UE determines that the reference signal sequence for performing channel measurement is a reference signal sequence to which the configured measurement carrier frequency corresponds, and performs channel measurement on the configured measurement carrier frequency with the configured measurement bandwidth by using the reference signal sequence to which the measurement carrier frequency corresponds; and if it is determined in step 302 that the channel measurement type is performing channel measurement based on an actual reference signal, that is, performing newly-defined channel measurement, the UE first determines an actual reference signal sequence, and then performs channel measurement on the configured measurement carrier frequency with the configured measurement bandwidth;

wherein, the UE may determine the actual reference signal sequence according to a carrier frequency of a serving cell, may also determine the actual reference signal sequence according to the configured carrier frequency on which the eNB is based in transmitting the actual reference signal, and may also determine the actual reference signal sequence according to reference signal offset information configured by the eNB, which shall be described in the following embodiments.

With the above method of the embodiment, a channel measurement type is indicated by adding one channel measurement indication in the RRC signaling, which may support the UE to correctly reconstruct reference signals in consistence with actually transmitted reference signals, thereby performing correct channel measurement, and improving precision and accuracy of the channel measurement.

In an implementation of this embodiment, the RRC signaling may be based on the configuration of the existing channel measurement, and no carrier frequency information is added, that is, the RRC signaling includes only the measurement carrier frequency (such as $f_{c1}$) and the measurement bandwidth configured by the eNB for the UE.

Corresponding to the implementation, if the UE determines that the channel measurement type is performing channel measurement based on the reference signal to which the measurement carrier frequency corresponds according to the channel measurement indication (such as Meas_type) in step 302, the UE performs channel measurement on the configured measurement carrier frequency $f_{c1}$ with the configured measurement bandwidth by using a reference signal to which the measurement carrier frequency $f_{c1}$ configured by the eNB for the UE corresponds in step 303; and if the UE determines that the channel measurement type is performing channel measurement based on the actual reference signal according to the channel measurement indication (Meas_type) in step 302, the UE performs channel measurement on the configured measurement carrier frequency $f_{c1}$ with the configured measurement bandwidth by using a reference signal to which the carrier frequency $f_c$ of the serving cell corresponds taking the carrier frequency (such as $f_c$) of the serving cell as the carrier frequency of the system bandwidth (i.e. the carrier frequency on which the eNB is based in transmitting the actual reference signal) in step 303. That is, if the eNB configures the UE with only one carrier frequency, i.e. the measurement carrier frequency $f_{c1}$, and the UE determines via the channel measurement indication (Meas_type) to perform the channel measurement based on the actual reference signal, the UE will perform the measurement based on a reference signal generated by $f_c$ of the serving cell (which is deemed as the $f_c$ on which the eNB is based in transmitting the actual reference signal) on the configured carrier frequency $f_{c1}$.

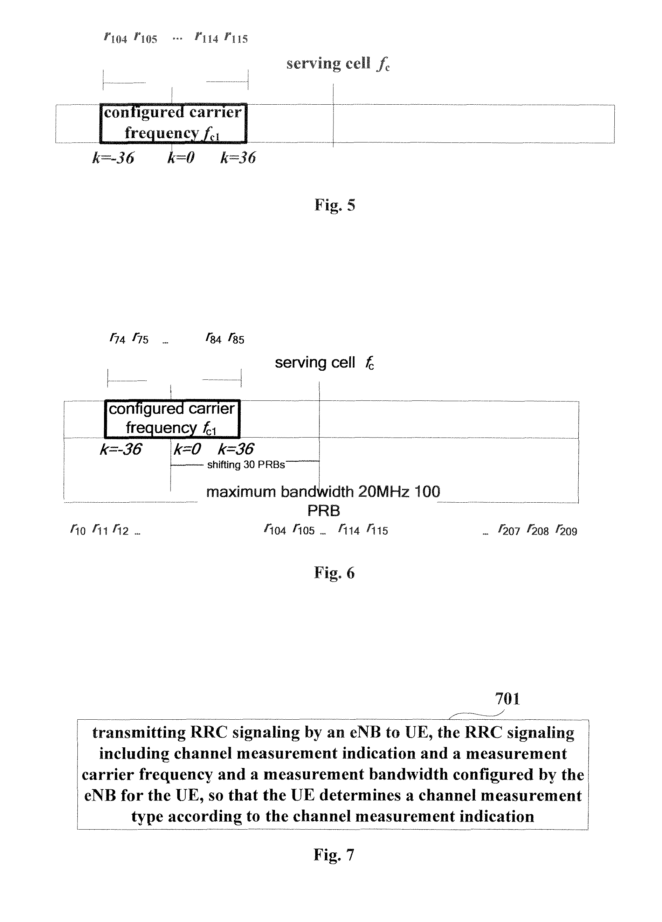

In another implementation of this embodiment, the RRC signaling may include two carrier frequencies, one is the carrier frequency $f_c$ on which the eNB is based in transmitting the actual reference signal, and the other is the carrier frequency $f_{c1}$ configured by the eNB for the UE for performing conventional channel measurement (i.e. the measurement carrier frequency). In this implementation, one piece of carrier frequency information may be added into the RRC signaling based on the existing measurement configuration (the eNB configures the UE with only one carrier frequency, i.e. the measurement carrier frequency $f_{c1}$), the newly-added carrier frequency information is the carrier frequency on which the eNB is based in transmitting the actual reference signal. For example, as shown in figure 6, the eNB configures the UE with carrier frequencies $f_{c1}$ and $fc$, wherein, $f_{c1}$ is a measurement carrier frequency configured by the eNB for the UE, and $f_c$ is a newly-added carrier frequency, i.e. a carrier frequency on which the eNB is based in transmitting the actual reference signal.

Corresponding to this implementation, if the UE determines that the channel measurement type is performing channel measurement based on the reference signal to which the measurement carrier frequency corresponds according to the channel measurement indication (Meas_type) in step 302, the UE performs channel measurement on the configured measurement carrier frequency $f_{c1}$ with the configured measurement bandwidth by using a reference signal sequence to which the measurement carrier frequency $f_{c1}$ configured by the eNB for the UE corresponds in step 303, that is, the UE performs conventional channel measurement; and if the UE determines that the channel measurement type is performing channel measurement based on the actual reference signal according to the channel measurement indication (Meas_type) in step 302, the UE performs channel measurement on the configured measurement carrier frequency $f_{c1}$ with the configured measurement bandwidth by using a reference signal to which the carrier frequency $f_c$ configured by the eNB for the UE on which the eNB is based in transmitting the actual reference signal corresponds in step 303, that is, the UE performs newly-defined channel measurement. That is, if the eNB configures the UE with two carrier frequencies, i.e. $f_{c1}$ and $f_c$, and the UE determines via the channel measurement indication (Meas_type) to perform the channel measurement based on the actual reference signal, the UE will perform the measurement based on a reference signal generated by $f_c$ of the eNB on the configured carrier frequency $f_{c1}$.

In this embodiment, in the two carrier frequencies configured by the eNB for the UE via RRC signaling, one is used for indicating a carrier frequency when performing the measurement (i.e. measurement carrier frequency), and the other is used for indicating a carrier frequency on which the eNB is based in transmitting the actual reference signal. The eNB here may be an eNB of a serving cell, and may also be eNBs of other cells. That is, the newly-added carrier frequency here may be a carrier frequency of the serving cell, and may also be a carrier frequency of another measurement object or another cell configured by the eNB, and this embodiment is not limited thereto.

In still another implementation of this embodiment, the RRC signaling may be added with a piece of reference signal offset information (such as offset) based on the existing configuration (the eNB configures the UE with only one carrier frequency, i.e. the measurement carrier frequency $f_{c1}$), the reference signal offset information being used to indicate an offset of the reference signal sequence to which the measurement carrier frequency corresponds relative to the actual reference signal sequence transmitted by the eNB, or to indicate an offset of the actual reference signal sequence transmitted by the eNB relative to the reference signal sequence to which the measurement carrier frequency corresponds.

In this embodiment, the reference signal sequence is generated according to a maximum bandwidth, such as a sequence generated by $N_{\mathrm{RB}}^{\mathrm{max,DL}} = 110$. The sequence may be pre-generated and stored at the UE side. The UE takes out a corresponding part of the stored sequence according to different bandwidth configuration, maps it onto $a_{k,l}^{(p)}$, and generates OFDM baseband signal according to formula (3):

$$s_l^{(p)}(t) = \sum_{k=-\left\lfloor N_{\mathrm{RB}}^{\mathrm{DL}} N_{\mathrm{sc}}^{\mathrm{RB}}/2 \right\rfloor}^{-1} a_{k^{(-)},l}^{(p)} \cdot e^{j 2\pi k \Delta f \left(t - N_{\mathrm{CP},l} T_s\right)} + \sum_{k=1}^{\left\lceil N_{\mathrm{RB}}^{\mathrm{DL}} N_{\mathrm{sc}}^{\mathrm{RB}}/2 \right\rceil} a_{k^{(+)},l}^{(p)} \cdot e^{j 2\pi k \Delta f \left(t - N_{\mathrm{CP},l} T_s\right)} \qquad (3);$$

where, $0 \le t < (N_{\mathrm{CP},l} + N) \times T_s$, $k^{(-)} = k + \left\lfloor N_{\mathrm{RB}}^{\mathrm{DL}} N_{\mathrm{sc}}^{\mathrm{RB}}/2 \right\rfloor$, and $k^{(+)} = k + \left\lfloor N_{\mathrm{RB}}^{\mathrm{DL}} N_{\mathrm{sc}}^{\mathrm{RB}}/2 \right\rfloor - 1$. $N_{\mathrm{RB}}^{\mathrm{DL}}$ is an actual system bandwidth, $N_{\mathrm{sc}}^{\mathrm{RB}} = 12$ is the number of subcarriers of each resource block, $N_{\mathrm{CP},l}$ is the length of a CP, $N$ is the length of a FFT, and $T_s$ is a time length of a sampling point. k = 0 corresponds to a serial number of a subcarrier of a central carrier frequency, as shown in Fig. 4.

Corresponding to this implementation, if the channel measurement type indicated by the channel measurement indication (Meas_type) is performing channel measurement based on the reference signal to which the measurement carrier frequency $f_{c1}$ corresponds, the UE performs conventional channel measurement, that is, performing channel measurement on the configured measurement carrier frequency $f_{c1}$ by using the reference signal to which the measurement carrier frequency $f_{c1}$ corresponds according to the configured measurement bandwidth. The reference signal sequence used by it is $r_{l,ns}(m')$; where, $m' = m + N_{RB}^{\max,DL} - N_{RB}^{DL}$, $N_{RB}^{DL}$ is the configured bandwidth, as shown in Fig. 5; wherein, as this channel measurement type is the conventional channel measurement described above, the reference signal sequence is also applicable to the above-described implementation, and m is 0.

Corresponding to this implementation, if the channel measurement type indicated by the channel measurement indication (Meas_type) is performing channel measurement based on the actual reference signal, the UE determines the actual reference signal according to the above-described reference signal offset information *offset,* and performs the channel measurement on the configured measurement carrier frequency $f_{c1}$ according to the configured measurement bandwidth by using the determined actual reference signal, i.e. the reference signal generated by $f_c$ of the eNB.

In an embodiment, the employed actual reference signal sequence is $r_{l,ns}(m')$; where, $m' = m + N_{RB}^{\max,DL} - N_{RB}^{DL} - \Delta N_{RB}^{DL}$; where, $\Delta N_{RB}^{DL}$ is the number of resource blocks of a difference between the configured measurement carrier frequency $f_{c1}$ and the carrier frequency $f_c$ on which the eNB is based in transmitting the actual reference signal. In this implementation, the offset information may take a physical source block (PRB) as a unit. For example, the configured measurement carrier frequency (i.e. the central carrier frequency when the UE performs conventional channel measurement) is $f_{c1}$, and the carrier frequency on which the eNB is based in transmitting the actual reference signal is $f_c$, the offset between $f_{c1}$ and $f_c$ being 30 PRBs, that is, $\Delta N_{RB}^{DL} = 30$, as shown in Fig. 6.

In another embodiment, the employed actual reference signal sequence is $r_{l,ns}(m')$; where, $m' = m + N_{RB}^{\max,DL} - N_{RB}^{DL}$, $N_{RB}^{DL}$ is the configured bandwidth, and what is different from the preceding embodiment is that a value of m is not 0, but is directly the configured reference signal offset value (a value of offset). At this moment, $f_{c1}$ and the value of offset are in the RRC signaling.

In this embodiment, the channel measurement indication may be transferred via a measurement object information element of the RRC signaling.

In an implementation, a new type (such as Meas_type described below) may be added in configuring measurement object (such as MeasObject described below) information, so that the channel measurement indication is positioned before the measurement object information of the RRC signaling.

```
MeasObjectToAddModList:: = SEQUENCE(SIZE(1..maxObjectId)) OF MeasObjectToAddMod
MeasObjectToAddMod::= SEQUENCE {
  measObjectId          MeasObjectId,
  Meas_type             ENUMERATED {0,1}
  measObject            CHOICE {
    measObjectEUTRA        MeasObjectEUTRA,
    measObjectUTRA         MeasObjectUTRA,
    measObjectGERAN        MeasObjectGERAN,
    measObjectCDMA2000        MeasObjectCDMA2000,
  }
}
```

In another implementation, the type indication (such as Meas_type described below) may be added within the measurement object information (such as MeasObjectEUTRA described below), so that the channel measurement indication is positioned within the measurement object information of the RRC signaling. As shown below, in this implementation, "carrierFreq_1" denotes the newly-added carrier frequency information, details of the carrier frequency information being as described above, and being not going to be described herein any further.

```
MeasObjectEUTRA::=       SEQUENCE {
  Meas_type              ENUMERATED {0.1}
  carrierFreq            ARFCN-ValueEUTRA,
  carrierFreq_1          ARFCN-ValueEUTRA,    Optional
  allowedMeasBandwidth      AllowedMeasBandwidth,
  presenceAntennaPort1      PresenceAntennaPort1,
  naighCellConfig           NeighCellConfig,
  offsetFreq            Q-OffsetRange        DEFAULT dB0,
```

```
-- Cell list
cellsToRemoveList      CellIndexList      OPTIONAL,   -- Need ON
cellsToAddModList      CellsToAddModList  OPTIONAL,   -- Neod ON
-- Black list
blackCellsToRemoveList  CellIndexList      OPTIONAL,   --Need ON
blackCellsToAddModList  BlackCellsToAddModList OPTIONAL,   -- Need ON
cellForWhichToReportCGI PhysCellId        OPTIONAL,   -- Need ON
 ...,
[[measCycleSCell-r10    MeasCycleSCell-r10   OPTIONAL,   -- Need ON
  measSubframePatternConfigNeigh-r10 MeasSubframePatternConfigNeigh-r10 OPTIONAL
  -- Need ON
]]
}
```

In this embodiment, "Meas_type" is the newly-added field (referred to as a newly-added field) in the measurement object information element of the RRC signaling of the embodiment of the present disclosure, which indicates via "ENUMERATED {0,1}" whether to perform channel measurement based on the reference signal to which the configured measurement carrier frequency corresponds or to perform channel measurement based on the actual reference signal. By performing the channel measurement by using the method of this embodiment, the UE can correctly reconstruct reference signals in consistence with actually transmitted reference signals, thereby performing correct measurement.

Embodiment 2

Embodiment 2 of the present disclosure provides a method for configuring channel measurement, which corresponds to the method for channel measurement of Embodiment 1, with the contents identical to those in Embodiment 1 being not going to be described in Embodiment 2 any further. Fig. 7 is a flowchart of the method. Referring to Fig. 7, the method includes:

> step 701: transmitting RRC signaling by an eNB to UE, the RRC signaling including channel measurement indication and a measurement carrier frequency and a measurement bandwidth configured by the eNB for the UE, so that the UE determines a channel measurement type according to the channel measurement indication.

In this embodiment, the channel measurement type includes: performing channel measurement based on a reference signal to which the measurement carrier frequency corresponds, or performing channel measurement based on an actual reference signal; wherein, the details and position of the channel measurement indication has been described in Embodiment 1, and the contents of which are incorporated herein, which shall not be described herein any further.

In an implementation of step 701, no new carrier frequency information is added into the RRC signaling, and when the UE determines according to the channel measurement indication that a channel measurement type is performing channel measurement based on the reference signal to which the measurement carrier frequency corresponds, the UE performs conventional channel measurement, that is, performing channel measurement on the configured measurement carrier frequency with the configured measurement bandwidth by using the reference signal to which the measurement carrier frequency corresponds; and when the UE determines according to the channel measurement indication that a channel measurement type is performing channel measurement based on the actual reference signal, the UE performs the above-described newly-defined channel measurement, that is, performing channel measurement on the configured measurement carrier frequency with the configured measurement bandwidth by using the reference signal to which the carrier frequency of the serving cell corresponds and taking the carrier frequency of the serving cell as the carrier frequency on which the eNB is based in transmitting the actual reference signal.

In another implementation of step 701, besides the above-described measurement carrier frequency and the measurement bandwidth configured by the eNB for the UE, the RRC signaling further includes the carrier frequency on which the eNB is based in transmitting the actual reference signal configured by the eNB for the UE. At this moment, when the UE determines according to the channel measurement indication that a channel measurement type is performing channel measurement based on the reference signal to which the measurement carrier frequency corresponds, the UE performs conventional channel measurement, that is, performing channel measurement on the configured measurement carrier frequency with the configured measurement bandwidth by using the reference signal to which the measurement carrier frequency corresponds; and when the UE determines according to the channel measurement indication that a channel measurement type is performing channel measurement based on the actual reference signal, the UE performs the above-described newly-defined channel measurement, that is, performing channel measurement on the configured measurement carrier frequency with the configured measurement bandwidth by using the configured reference signal to which the carrier frequency on which the eNB is based in transmitting the actual reference signal.

In a further implementation of step 701, besides the above-described measurement carrier frequency and the measurement bandwidth configured by the eNB for the UE, the RRC signaling further includes the reference signal offset information configured by the eNB for the UE, the reference signal offset information indicates a relative offset between the reference signal sequence reconstructed in performing channel measurement based on the reference signal to which the configured measurement carrier frequency corresponds and the actual reference signal sequence transmitted by the eNB. At this moment, when the UE determines according to the channel measurement indication that a channel measurement type is performing channel measurement based on the reference signal to which the measurement carrier frequency corresponds, the UE performs conventional channel measurement, that is, performing channel measurement on the configured measurement carrier frequency with the configured measurement bandwidth by using the reference signal to which the configured measurement carrier frequency corresponds; and when the UE determines according to the channel measurement indication that a channel measurement type is performing channel measurement based on the actual reference signal, the UE determines the actual reference signal according to the reference signal offset information, and performs channel measurement on the configured measurement carrier frequency with the configured measurement bandwidth by using the actual reference signal.

In this embodiment, performing channel measurement based on the reference signal to which the measurement carrier frequency corresponds or performing channel measurement based on the actual reference signal by the UE according to the contents included in the RRC signaling has been described in Embodiment 1, and shall not be described herein any further.

By configuring the channel measurement by using the method of this embodiment, the UE can correctly reconstruct reference signals in consistence with actually transmitted reference signals, thereby performing correct measurement.

An embodiment of the present disclosure further provides UE. As the principle of the UE for solving problems is similar to that of the method of Embodiment 1, the implementation of the method of Embodiment 1 may be referred to for the implementation of this embodiment, and the repeated parts shall not be described any further.

Embodiment 3

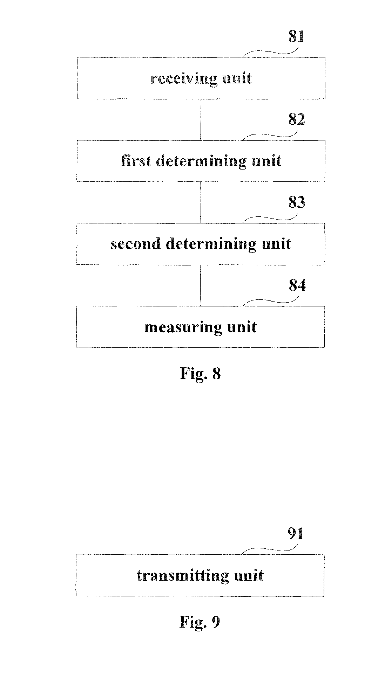

Embodiment 3 of the present disclosure provides UE. Fig. 8 is a schematic diagram of the structure of the UE. Referring to Fig. 8, the UE includes:

a receiving unit 81 configured to receive RRC signaling transmitted by an eNB, the RRC signaling including channel measurement indication and a measurement carrier frequency and a measurement bandwidth configured by the eNB for the UE;

a first determining unit 82 configured to determine a channel measurement type according to the channel measurement indication, the channel measurement type including: performing channel measurement based on the reference signal to which the measurement carrier frequency corresponds, or performing channel measurement based on an actual reference signal;

a second determining unit 83 configured to determine a reference signal sequence for performing channel measurement according to the channel measurement type determined by the first determining unit; and

a measuring unit 84 configured to perform channel measurement on a configured measurement carrier frequency with the configured measurement bandwidth by using the determined reference signal sequence.

In an implementation of this embodiment, the RRC signaling includes only the measurement carrier frequency and the measurement bandwidth configured by the eNB for the UE.

In this implementation,

if the first determining unit 82 determines according to the channel measurement indication that the channel measurement type is performing channel measurement based on the reference signal to which the measurement carrier frequency corresponds, the second determining unit 83 determines that the reference signal sequence for performing channel measurement is a reference signal sequence to which the configured measurement carrier frequency corresponds, and the measuring unit 84 performs channel measurement on the configured measurement carrier frequency with the configured measurement bandwidth by using the reference signal to which the measurement carrier frequency corresponds; and

if the first determining unit 82 determines according to the channel measurement indication that the channel measurement type is performing channel measurement based on an actual reference signal, the second determining unit 83 takes a carrier frequency of a serving cell as the carrier frequency on which the eNB is based in transmitting the actual reference signal, and determines that the reference signal sequence for performing channel measurement is a reference signal sequence to which the carrier frequency of the serving cell corresponds, and the measuring unit 84 performs channel measurement on the configured measurement carrier frequency with the configured measurement bandwidth by using the reference signal to which the carrier frequency of the serving cell corresponds.

In another implementation of this embodiment, the RRC signaling includes the measurement carrier frequency and the measurement bandwidth configured by the eNB for the UE and the carrier frequency on which the eNB is based in transmitting the actual reference signal (wherein, the eNB here may be an eNB of the serving cell, and may also be an eNB of another measurement object or another cell).

In this implementation,

if the first determining unit 82 determines according to the channel measurement indication that the channel measurement type is performing channel measurement based on the reference signal to which the measurement carrier frequency corresponds, the second determining unit 83 determines that the reference signal sequence for performing channel measurement is a reference signal sequence to which the configured measurement carrier frequency corresponds, and the measuring unit 84 performs channel measurement on the configured measurement carrier frequency with the configured measurement bandwidth by using the reference signal to which the measurement carrier frequency corresponds; and

if the first determining unit 82 determines according to the channel measurement indication that the channel measurement type is performing channel measurement based on an actual reference signal, the second determining unit 83 determines that the reference signal sequence for performing channel measurement is a reference signal sequence to which the configured carrier frequency on which the eNB is based in transmitting the actual reference signal corresponds, and the measuring unit 84 performs channel measurement on the configured measurement carrier frequency with the configured measurement bandwidth by using the reference signal to which the configured carrier frequency on which the eNB is based in transmitting the actual reference signal corresponds.

In another implementation of this embodiment, the RRC signaling includes the measurement carrier frequency and the measurement bandwidth configured by the eNB for the UE and the reference signal offset information, the reference signal offset information indicating a relative offset between a reference signal sequence reconstructed by the UE in performing channel measurement based on the reference signal to which the measurement carrier frequency corresponds and an actual reference signal sequence transmitted by the eNB.

In this implementation,

if the first determining unit 82 determines according to the channel measurement indication that the channel measurement type is performing channel measurement based on the reference signal to which the measurement carrier frequency corresponds, the second determining unit 83 determines that the reference signal sequence for performing channel measurement is a reference signal sequence to which the configured measurement carrier frequency corresponds, and the measuring unit 84 performs channel measurement on the configured measurement carrier frequency with the configured measurement bandwidth by using the reference signal to which the measurement carrier frequency corresponds; and

if the first determining unit 82 determines according to the channel measurement indication that the channel measurement type is performing channel measurement based on an actual reference signal, the second determining unit 83 determines that the reference signal sequence for performing channel measurement is an actual reference signal sequence determined according to the reference signal offset information, and the measuring unit 84 determines the actual reference signal according to the reference signal offset information and performs channel measurement on the configured measurement carrier frequency with the configured measurement bandwidth by using the determined actual reference signal.

In this embodiment, the channel measurement indication may be transferred via a measurement object information element of the RRC signaling. The channel measurement indication is positioned before the measurement object information of the RRC signaling, or the channel measurement indication is positioned within the measurement object information of the RRC signaling.

By performing the channel measurement by the UE of this embodiment, the UE can correctly reconstruct reference signals in consistence with actually transmitted reference signals, thereby performing correct measurement.

An embodiment of the present disclosure further provides an eNB. As the principle of the eNB for solving problems is similar to that of the method of Embodiment 2, the implementation of the method of Embodiment 2 may be referred to for the implementation of this embodiment, and the repeated parts shall not be described any further.

Embodiment 4

Embodiment 4 of the present disclosure provides an eNB. Fig. 9 is a schematic diagram of the structure of the eNB. Referring to Fig. 9, the eNB includes:

a transmitting unit 91 configured to transmit RRC signaling to UE, the RRC signaling including channel measurement indication and measurement carrier frequency and measurement bandwidth configured by the eNB for the UE, so that the UE determines a channel measurement type according to the channel measurement indication, the channel measurement indication including: performing channel measurement based on the reference signal to which the measurement carrier frequency corresponds, or performing channel measurement based on an actual reference signal.

In this embodiment,

in an implementation, the RRC signaling includes a measurement carrier frequency and a measurement bandwidth configured by the eNB for the UE;

in another implementation, the RRC signaling includes the measurement carrier frequency and the measurement bandwidth configured by the eNB for the UE and the carrier frequency on which the eNB is based in transmitting the actual reference signal (wherein, the eNB here may be an eNB of the serving cell, and may also be an eNB of another measurement object or another cell);

in a further implementation, the RRC signaling includes the measurement carrier frequency and the measurement bandwidth configured by the eNB for the UE and reference signal offset information, the reference signal offset information indicating a relative offset between a reference signal sequence reconstructed by the UE in performing channel measurement based on a reference signal to which the measurement carrier frequency corresponds and an actual reference signal sequence transmitted by the eNB.

In this embodiment, the channel measurement indication may be transferred via a measurement object information element of the RRC signaling. The channel measurement indication is positioned before the measurement object information of the RRC signaling, or the channel measurement indication is positioned within the measurement object information of the RRC signaling.

By configuring the channel measurement by the eNB of this embodiment, the UE can correctly reconstruct reference signals in consistence with actually transmitted reference signals, thereby performing correct measurement.

An embodiment of the present disclosure further provides a communication system, including the UE as described in Embodiment 3 and the eNB as described in Embodiment 4.

An embodiment of the present disclosure further provides a computer-readable program, wherein when the program is executed in terminal equipment, the program enables a computer to carry out the method for channel measurement as described in Embodiment 1 in the terminal equipment.

An embodiment of the present disclosure further provides a storage medium in which a computer-readable program is stored, wherein the computer-readable program enables a computer to carry out the method for channel measurement as described in Embodiment 1 in terminal equipment.

An embodiment of the present disclosure further provides a computer-readable program, wherein when the program is executed in an eNB, the program enables a computer to carry out the method for configuring channel measurement as described in Embodiment 2 in the eNB.

An embodiment of the present disclosure further provides a storage medium in which a computer-readable program is stored, wherein the computer-readable program enables a computer to carry out the method for configuring channel measurement as described in Embodiment 2 in an eNB.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

**Claims**

1. A method for channel measurement, comprising:

   receiving, by UE, RRC signaling transmitted by an eNB, the RRC signaling comprising channel measurement indication and a measurement carrier frequency and a measurement bandwidth configured by the eNB for the UE; determining a channel measurement type by the UE according to the channel measurement indication, the channel measurement type comprising: performing channel measurement based on a reference signal to which the measurement carrier frequency corresponds, or performing channel measurement based on an actual reference signal;

   determining a reference signal sequence for performing channel measurement by the UE according to the channel measurement type; and
performing channel measurement by the UE on the measurement carrier frequency with the measurement bandwidth by using the reference signal sequence.

2. The method according to claim 1, wherein,
if the UE determines according to the channel measurement indication that the channel measurement type is performing channel measurement based on the reference signal to which the measurement carrier frequency corresponds, the UE determines that the reference signal sequence for performing channel measurement is a reference signal sequence to which the measurement carrier frequency corresponds; and
if the UE determines according to the channel measurement indication that the channel measurement type is performing channel measurement based on an actual reference signal, the UE takes a carrier frequency of a serving cell as the carrier frequency on which the eNB is based in transmitting the actual reference signal, and determines that the reference signal sequence for performing channel measurement is a reference signal sequence to which the carrier frequency of the serving cell corresponds.

3. The method according to claim 1, wherein the RRC signaling further comprises a carrier frequency configured by the eNB for the UE, on which the eNB is based in transmitting the actual reference signal.

4. The method according to claim 3, wherein,
if the UE determines according to the channel measurement indication that the channel measurement type is performing channel measurement based on the reference signal to which the measurement carrier frequency corresponds, the UE determines that the reference signal sequence for performing channel measurement is a reference signal sequence to which the measurement carrier frequency corresponds; and
if the UE determines according to the channel measurement indication that the channel measurement type is performing channel measurement based on an actual reference signal, the UE determines that the reference signal sequence for performing channel measurement is a reference signal sequence to which the carrier frequency on which the eNB is based in transmitting the actual reference signal corresponds.

5. The method according to claim 1, wherein the RRC signaling further comprises reference signal offset information, the reference signal offset information indicating a relative offset between a reference signal sequence reconstructed by the UE in performing channel measurement based on the reference signal to which the measurement carrier frequency corresponds and an actual reference signal sequence transmitted by the eNB.

6. The method according to claim 5, wherein,
if the UE determines according to the channel measurement indication that the channel measurement type is performing channel measurement based on the reference signal to which the measurement carrier frequency corresponds, the UE determines that the reference signal sequence for performing channel measurement is a reference signal sequence to which the measurement carrier frequency corresponds; and
if the UE determines according to the channel measurement indication that the channel measurement type is performing channel measurement based on an actual reference signal, the UE determines that the reference signal sequence for performing channel measurement is a reference signal sequence determined according to the reference signal offset information.

7. The method according to any one of claims 1-6, wherein,
the channel measurement indication is positioned before measurement object information of the RRC signaling, or the channel measurement indication is positioned within the measurement object information of the RRC signaling.

8. A method for configuring channel measurement, comprising:

transmitting RRC signaling by an eNB to UE, the RRC signaling comprising channel measurement indication and a measurement carrier frequency and a measurement bandwidth configured by the eNB for the UE, so that the UE determines a channel measurement type according to the channel measurement indication, the channel measurement type comprising: performing channel measurement based on a reference signal to which the measurement carrier frequency corresponds, or performing channel measurement based on an actual reference signal.

9. The method according to claim 8, wherein the RRC signaling further comprises a carrier frequency on which the eNB is based in transmitting the actual reference signal, or the RRC signaling further comprises reference signal offset information, the reference signal offset information indicating a relative offset between a reference signal sequence reconstructed by the UE in performing channel measurement based on the reference signal to which the measurement carrier frequency corresponds and an actual reference signal sequence transmitted by the eNB.

10. The method according to claim 8 or 9, wherein,
the channel measurement indication is positioned before measurement object information of the RRC signaling, or the channel measurement indication is positioned within the measurement object information of the RRC signaling.

11. User equipment (UE), comprising:

a receiving unit configured to receive RRC signaling transmitted by an eNB, the RRC signaling comprising channel measurement indication and a measurement carrier frequency and a measurement bandwidth configured by the eNB for the UE;
a first determining unit configured to determine a channel measurement type according to the channel measurement indication, the channel measurement type comprising: performing channel measurement based on the reference signal to which the measurement carrier frequency corresponds, or performing channel measurement based on an actual reference signal;
a second determining unit configured to determine a reference signal sequence for performing channel measurement according to the channel measurement type; and
a measuring unit configured to perform channel measurement on the measurement carrier frequency with the measurement bandwidth by using the reference signal sequence.

12. The UE according to claim 11, wherein,
if the first determining unit determines that the channel measurement type is performing channel measurement based on the reference signal to which the measurement carrier frequency corresponds, the second determining unit determines that the reference signal sequence for performing channel measurement is a reference signal sequence to which the measurement carrier frequency corresponds; and
if the first determining unit determines that the channel measurement type is performing channel measurement based on an actual reference signal, the second determining unit takes a carrier frequency of a serving cell as the carrier frequency on which the eNB is based in transmitting the actual reference signal, and determines that the reference signal sequence for performing channel measurement is a reference signal sequence to which the carrier frequency of the serving cell corresponds.

13. The UE according to claim 11, wherein the RRC signaling further comprises a carrier frequency configured by the eNB for the UE, on which the eNB is based in transmitting the actual reference signal.

14. The UE according to claim 13, wherein,
if the first determining unit determines that the channel measurement type is performing channel measurement based on the reference signal to which the measurement carrier frequency corresponds, the second determining unit determines that the reference signal sequence for performing channel measurement is a reference signal sequence to which the measurement carrier frequency corresponds; and
if the first determining unit determines that the channel measurement type is performing channel measurement based on an actual reference signal, the second determining unit determines that the reference signal sequence for performing channel measurement is a reference signal sequence to which the carrier frequency on which the eNB is based in transmitting the actual reference signal corresponds.

15. The UE according to claim 11, wherein the RRC signaling further comprises reference signal offset information, the reference signal offset information indicating a relative offset between a reference signal sequence reconstructed by the UE in performing channel measurement based on the reference signal to which the measurement carrier frequency corresponds and an actual reference signal sequence transmitted by the eNB.

16. The UE according to claim 15, wherein,
if the first determining unit determines that the channel measurement type is performing channel measurement based on the reference signal to which the measurement carrier frequency corresponds, the second determining unit determines that the reference signal sequence for performing channel measurement is a reference signal sequence to which the measurement carrier frequency corresponds; and
if the first determining unit determines that the channel measurement type is performing channel measurement based on an actual reference signal, the second determining unit determines that the reference signal sequence for performing channel measurement is a reference signal sequence determined according to the reference signal offset information.

17. The UE according to any one of claims 11-16, wherein,
the channel measurement indication is positioned before measurement object information of the RRC signaling, or the channel measurement indication is positioned within the measurement object information of the RRC signaling.

18. An eNB, applicable to configuring channel measurement, wherein the eNB comprises:

a transmitting unit configured to transmit RRC signaling to UE, the RRC signaling comprising channel measurement indication and a measurement carrier frequency and a measurement bandwidth configured by the eNB for the UE, so that the UE determines a channel measurement type according to the channel measurement indication, the channel measurement indication comprising: performing channel measurement based on the reference signal to which the measurement carrier frequency corresponds, or performing channel measurement based on an actual reference signal.

19. The eNB according to claim 18, wherein the RRC signaling further comprises a carrier frequency configured by the eNB for the UE, on which the eNB is based in transmitting the actual reference signal, or the RRC signaling further comprises reference signal offset information, the reference signal offset information indicating a relative offset between a reference signal sequence reconstructed by the UE in performing channel measurement based on a reference signal to which the measurement carrier frequency corresponds and an actual reference signal sequence transmitted by the eNB.

20. The eNB according to claim 18 or 19, wherein,
the channel measurement indication is positioned before measurement object information of the RRC signaling, or the channel measurement indication is positioned within the measurement object information of the RRC signaling.

21. A communication system, comprising the UE as claimed in any one of claims 11-17 and the eNB as claimed in any one of claims 18-20.

22. A computer-readable program, wherein when the program is executed in terminal equipment, the program enables a computer to carry out the method for channel measurement as claimed in any one of claims 1-7 in the terminal equipment.

23. A storage medium in which a computer-readable program is stored, wherein the computer-readable program enables a computer to carry out the method for channel measurement as claimed in any one of claims 1-7 in terminal equipment.

24. A computer-readable program, wherein when the program is executed in an eNB, the program enables a computer to carry out the method for configuring channel measurement as claimed in any one of claims 8-10 in the eNB.

25. A storage medium in which a computer-readable program is stored, wherein the computer-readable program enables a computer to carry out the method for configuring channel measurement as claimed in any one of claims 8-10 in an eNB.

carrier frequency of
MTC UE

carrier frequency of cell

```
┌──────────────────────────────────────────────────────────────┐
│ ╔════════════════╗                                             │
│ ║ MTC bandwidth1 ║                                             │
│ ╚════════════════╝                                             │
```

1.4 MHz

system bandwidth
20MHz

Fig. 1

carrier frequency of cell

```
┌──────────────────────────────────────────────────────────────┐
│ ╔═══════════════════╗ ╔═══════════════╗ ╔═══════════════════╗ │
│ ║ measurement object2║ ║ measurement   ║ ║measurement object 3║ │
│ ╚═══════════════════╝ ║   object 1    ║ ╚═══════════════════╝ │
│                       ╚═══════════════╝                        │
```

system bandwidth
20MHz

Fig. 2

| 301 |
| --- |
| receiving, by UE, RRC signaling transmitted by an eNB, the RRC signaling including channel measurement indication and a measurement carrier frequency and a measurement bandwidth configured by the eNB for the UE |

| 302 |
| --- |
| determining a channel measurement type by the UE according to the channel measurement indication |

| 303 |
| --- |
| determining a reference signal sequence for performing channel measurement by the UE according to the determined channel measurement type |

| 304 |
| --- |
| performing channel measurement by the UE on a configured measurement carrier frequency with the configured measurement bandwidth by using the determined reference signal sequence |

**Fig. 3**

Sequences of reference signal r

$r_0$ $r_1$ $r_2$ ···        ··· $r_{218}$ $r_{219}$

$r_{104}$ $r_{105}$  ···  $r_{114}$ $r_{115}$

**actual system bandwidth 1.4 MHz  6 PRB**

$f_c$

$k=-36$      $k=0$      $k=36$

**maximum bandwidth 20MHz 100 PRB**

$r_{10}$ $r_{11}$ $r_{12}$ ···        $r_{104}$ $r_{105}$ ··· $r_{114}$ $r_{115}$        ··· $r_{207}$ $r_{208}$ $r_{209}$

**Fig. 4**

$r_{104}$ $r_{105}$ ... $r_{114}$ $r_{115}$

serving cell $f_c$

configured carrier
frequency $f_{c1}$

$k=-36$    $k=0$    $k=36$

**Fig. 5**

$r_{74}$ $r_{75}$ ... $r_{84}$ $r_{85}$

serving cell $f_c$

configured carrier
frequency $f_{c1}$

$k=-36$    $k=0$    $k=36$

shifting 30 PRBs

maximum bandwidth 20MHz 100
PRB

$r_{10}$ $r_{11}$ $r_{12}$ ...    $r_{104}$ $r_{105}$ ... $r_{114}$ $r_{115}$    ... $r_{207}$ $r_{208}$ $r_{209}$

**Fig. 6**

701

transmitting RRC signaling by an eNB to UE, the RRC signaling
including channel measurement indication and a measurement
carrier frequency and a measurement bandwidth configured by the
eNB for the UE, so that the UE determines a channel measurement
type according to the channel measurement indication

**Fig. 7**

```
                                    ┌─────── 81
       ┌──────────────────────────────────┐
       │         receiving unit           │
       └──────────────────────────────────┘
                         │          ┌─────── 82
       ┌──────────────────────────────────┐
       │      first determining unit      │
       └──────────────────────────────────┘
                         │          ┌─────── 83
       ┌──────────────────────────────────┐
       │     second determining unit      │
       └──────────────────────────────────┘
                         │          ┌─────── 84
       ┌──────────────────────────────────┐
       │         measuring unit           │
       └──────────────────────────────────┘
```

Fig. 8

```
                                    ┌─────── 91
       ┌──────────────────────────────────┐
       │        transmitting unit         │
       └──────────────────────────────────┘
```

Fig. 9

## INTERNATIONAL SEARCH REPORT

| | International application No. |
|---|---|
| | PCT/CN2013/070004 |

**A. CLASSIFICATION OF SUBJECT MATTER**

H04W 24/00 (2009.01) i

According to International Patent Classification (IPC) or to both national classification and IPC

**B. FIELDS SEARCHED**

Minimum documentation searched (classification system followed by classification symbols)

IPC: H04W; H04Q; H04B

Documentation searched other than minimum documentation to the extent that such documents are included in the fields searched

Electronic data base consulted during the international search (name of data base and, where practicable, search terms used)

CNPAT, CNTXT, VEN, GOOGLE: channel w measurement, indicator, carier?, reference w signal, frequency, bandwidth, RRC w signaling, channel, measurement, configuration

**C. DOCUMENTS CONSIDERED TO BE RELEVANT**

| Category* | Citation of document, with indication, where appropriate, of the relevant passages | Relevant to claim No. |
|---|---|---|
| A | CN 102480756 A (ZTE CORPORATION) 30 May 2012 (30.05.2012) the abstract, claims 1-12 | 1-25 |
| A | CN 101827369 A (NEW POSTCOM EQUIPMENT CO., LTD.) 08 September 2010 (08.09.2010) the abstract, claims 1-7 | 1-25 |
| A | CN 102026219 A (ZTE CORPORATION) 20 April 2011 (20.04.2011) the whole document | 1-25 |
| A | WO 2012152106 A1 (ZTE CORPORATION) 15 November 2012 (15.11.2012) the whole document | 1-25 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 27 September 2013 (27.09.2013) | 17 October 2013 (17.10.2013) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer WU, Xinghua Telephone No. (86-10) 62411371 |
|---|---|

Form PCT/ISA /210 (second sheet) (July 2009)

20

## INTERNATIONAL SEARCH REPORT

International application No.

PCT/CN2013/070004

C (Continuation).    DOCUMENTS CONSIDERED TO BE RELEVANT

| Category* | Citation of document, with indication, where appropriate, of the relevant passages | Relevant to claim No. |
|---|---|---|
| A | CN 102315871 A (ZTE CORPORATION) 11 January 2012 (11.01.2012) the whole document | 1-25 |

Form PCT/ISA /210 (continuation of second sheet) (July 2009)

## INTERNATIONAL SEARCH REPORT
### Information on patent family members

| | International application No. |
|---|---|
| | PCT/CN2013/070004 |

| Patent Documents referred in the Report | Publication Date | Patent Family | Publication Date |
|---|---|---|---|
| CN 102480756 A | 30.05.2012 | WO 2012071911 A1 | 07.06.2012 |
| CN 101827369 A | 08.09.2010 | None | |
| CN 102026219 A | 20.04.2011 | WO 2011035517 A1 | 31.03.2011 |
| WO 2012152106 A1 | 15.11.2012 | CN 102769516 A | 07.11.2012 |
| CN 102315871 A | 11.01.2012 | WO 2012155523 A1 | 22.11.2012 |

Form PCT/ISA /210 (patent family annex) (July 2009)